# EUROPEAN PATENT APPLICATION

(11) **EP 0 784 004 A1**
(43) Date of publication of application: **16.07.1997**
(21) Application number: 96203657.0
(22) Date of filing: 20.12.1996
(51) Int. Cl.: B62D 25/20, B62D 33/04

(54) **Body assembly**

(30) Priority: 15.01.1996 NL 1002090; 24.04.1996 NL 1002931
(71) Applicant: VERENIGING VERENIGDE CARROSSERIEBOUWERS, 1442 LC Purmerend (NL)
(72) Inventor: Karhof, Johannes Gerardus, 1441 EX Purmerend (NL)
(74) Representative: Van Weele, Paul Johannes Frits

(57) **Abstract**

A body assembly (1) to be erected on a vehicle (2) provided with a chassis (3) having steel chassis elements such as longitudinal runners (4), cross beams (5), mounting brackets (6) for the construction of a body, etc., which body can be mounted onto the chassis and comprises at least a floor construction (11), and possibly further parts such as walls (8, 9, 10), a roof (7) and a rear portal (12). The floor construction (11) is assembled among other materials from aluminium profiles.

## Description

The present invention relates to a body assembly to be erected on a vehicle provided with a chassis, having steel chassis elements such as longitudinal runners, cross beams, mounting brackets for the construction of a body, etc., which body can be mounted onto the chassis and comprises at least a floor construction, and possibly further parts such as walls, a roof and a rear portal.

From the European patent specification 0 310 157, also by applicant, a body assembly is already known for a lorry or the like, having a floor construction as well as side walls, a front wall, a roof and a rear portal with doors, wherein for the walls, the roof and the doors several kinds of aluminium profiles are used, which resulted in a considerable weight reduction of the total body assembly. If desired, the extruded aluminium profiles may have a complex cross-section so that they can incorporate various functions, and the assembly of the body from the separate wall panels, the roof, etc. is considerably simplified and can be accomplished with the sole use of bolt connections. By this approach it has furthermore become possible to dispatch body assemblies comprising wall panels, a roof, etc. in the form of a construction kit to the factory where the body is finally assembled onto the chassis of the vehicle for the assemblage of a complete body. This allows for a more standardized production of body assemblies with the added advantage that the actual assembly of the body work can be carried out close to the buyer, affording important logistic advantages as well as lower transport costs.

The object of the invention is to provide a body assembly of the kind mentioned in the introduction, which in addition to the advantages mentioned, offers a body assembly of an even lower weight as well as offering additional advantages and is characterized in that the floor construction is assembled among other materials from aluminium profiles.

Aluminium has been used for many years in body construction. Both the use of aluminium plate material and the use of aluminium profiles have made many constructions possible which have had advantageous consequences for the building of bodies but in particular for the buyer, the user of the bodies. Thus aluminium offers important advantages in the world of road transport.

In contrast to the body assemblies customary up to date, the body assemblies according to the invention now also comprise a floor construction assembled from, among other materials, aluminium profiles. Even if for the rest much use was made of aluminium profiles, until now the floor constructions of bodies were always made from steel, the steel parts of the floor construction being welded to each other and to the vehicle's steel chassis. Compared with the known lorries, which for the rest are provided with an aluminium body assembly, this affords a weight reduction of many percent and thus of several hundred kilograms. There will be no doubt that in this way an important contribution is made toward lowering the weight of vehicles and lorries which is also desirable in view of the environment. It has been shown that the body assemblies according to the invention are as strong as the usual body assemblies with floor constructions made of steel profiles and that they are not more expensive.

One embodiment of the invention is characterized in that the floor construction comprises a basic frame construction consisting for a large part of extruded aluminium profiles.

In its elementary form, the basic frame construction forms the supporting floor construction and as such the base of the body. It is in addition the connecting element between the vehicle's chassis and the body. There are chassis in many forms and sizes, depending on the make and type of vehicle. By utilizing the possibilities offered by the design of the extruded profiles, the invention uses its characteristics regarding the necessary flexibility in execution and the possibility for interconnection. This helps to remove an important reason for the stagnation of the development in the manufacture of bodies made entirely from aluminium.

A further embodiment of the invention is characterized in that profiles of the floor construction can be mounted onto steel chassis elements of the chassis with the aid of mounting plates which engage the longitudinal runner profile of the basic frame construction and which can be fastened to the steel chassis elements.

The advantage of such a method of fastening is that one can make good use of the specific shape of the extruded aluminium profiles, because when forming the aluminium profiles one can, of course, keep in mind how they are intended to interact with the mounting plates .

In another embodiment of the invention the mounting plates themselves are also lengths of an extruded aluminium profile. This embodiment affords a simple manner to optimally match the different profiles while always using the same extruded aluminium profile for which, depending on the application, different lengths of mounting plates may be cut.

A further embodiment of the invention is characterized in that the basic frame construction comprises among other things three different kinds of extruded profiles, a first, second and third kind, of which the first kind is used as longitudinal runner profile, the second kind as cross beam profile and the third kind as floor support profile.

A long developmental stage has shown that the assembly of the basic frame construction of a body assembly may be based substantially on the three different kinds of extruded profiles mentioned. If necessary, other kinds of extruded profiles can be added, more in particular, depending on the kind of body, a special profile can be used for the outer frame of the basic frame construction in connection with fitting the standing walls. The cross beam profiles are mounted onto the longitudinal runner profiles while the floor support profiles are subsequently mounted between the profiled cross beams onto the profiled longitudinal runners to bridge the difference in height. All this will be elucidated in the description to the drawing still to follow.

A further embodiment of the invention for body assemblies which also have a rear portal is characterized in that the rear portal is assembled from a lintel and a threshold, as well as two uprights; that the lintel consists of an extruded aluminium moulded roof edge; that the threshold consists of an extruded aluminium moulded floor edge; and that each of the uprights consist of an extruded aluminium moulded edge of an auxiliary wall.

Special about this very advantageous embodiment of the invention is, that not only is it no longer necessary that the rear portal is made of steel profiles, but that in fact there is no longer any separate rear portal. The rear portal is formed during the construction of the body assembly by the aluminium profiles from the surrounding walls and roof. This means at the same time a saving in profiles for the walls and the roof, resulting in fewer parts and a further saving in weight. Until now the rear portal was welded together from steel profiles. The invention thus introduces for the first time a body assembly in which substantially all the profiles used are made of aluminium and in which a separate rear portal is no longer necessary. Thus, a construction kit for a closed body assembly according to the invention no longer requires a rear portal, or, it is no longer necessary to make a separate rear portal at the place of delivery.

The invention also relates to a vehicle provided with a body assembly of the kind mentioned above. The vehicle according to the invention is characterized in that the aluminium basic frame construction is mounted with the aid of bolts onto the steel chassis elements of the vehicles's chassis. There is no need for any welding work so that clean and quick production can take place without any extra burden on the environment ensuing from welding.

The invention will now be further elucidated with reference to the drawing which, merely by way of example, relates to an embodiment of the invention, without limiting the invention to this embodiment, showing in:
Fig. 1 a perspective side view of a vehicle provided with a body assembly;
Fig. 2 a perspective detail of the chassis of the vehicle of Fig. 1 mounted on which are some aluminium profiles of a basic frame according to the invention;
Fig. 3 a cross-section of a longitudinal runner profile;
Fig. 4 a cross-section of a cross beam profile;
Fig. 5 a cross-section of a floor support profile;
Fig. 6 a cross-section of a mounting plate;
Fig. 7 a cross-section of a siding profile;
Fig. 8 a sectional view of an aluminium moulded wall edge forming an upright of a rear portal;
Fig. 9 a sectional view of an aluminium moulded roof edge forming the lintel of a rear portal;
Fig. 10 a sectional view of an aluminium moulded edge of the floor construction forming the threshold of the rear portal.

The figures are drawn on arbitrary scales which often vary in relation to each other. Corresponding parts in the various figures are indicated by the same reference number.

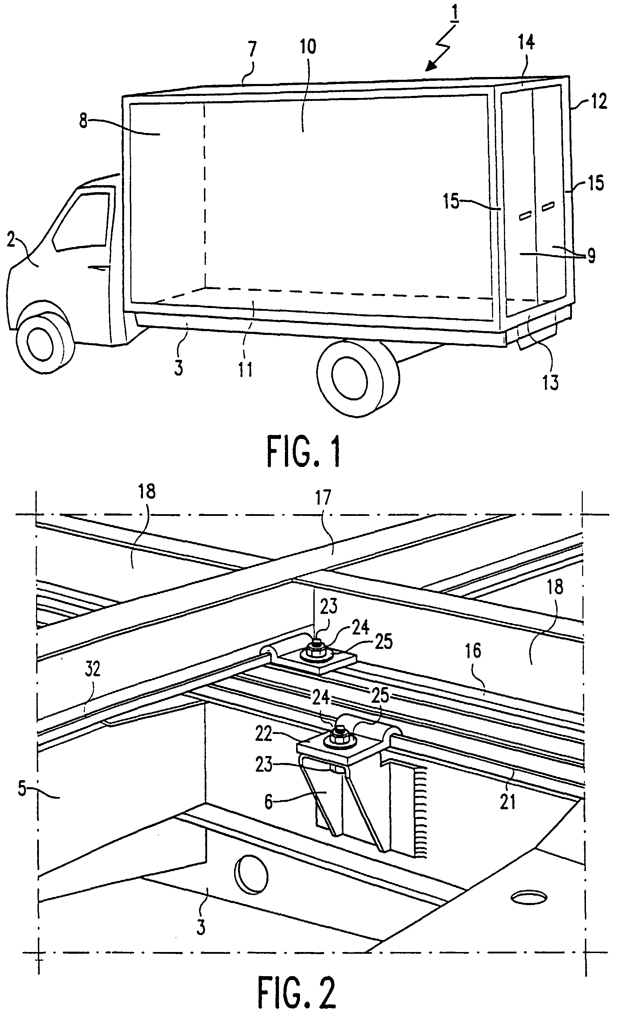

The body assembly 1 in Fig. 1 is mounted on a vehicle 2 which is provided with a chassis 3 having steel chassis elements. Fig. 2 shows parts of a longitudinal runner 4 of the chassis and a cross beam 5 and a mounting bracket 6 which serve for the construction of a desired body. The body comprises substantially a roof panel 7, a front wall panel, a pair of doors 9, a pair of side wall panels 10 as well as a floor construction 11. Surrounding the doors 9 there is a rear portal 12 consisting of a threshold 13, a lintel 14 and two uprights 15. The floor construction 11 is mounted on the vehicle's steel chassis 3. With vehicles according to the known prior art, the floor assembled is constructed from steel profiles being welded to the chassis 3 and to each other and onto which a floor and further parts are mounted in the known manner. On this floor construction the side walls, the front wall and the rear portal are mounted.

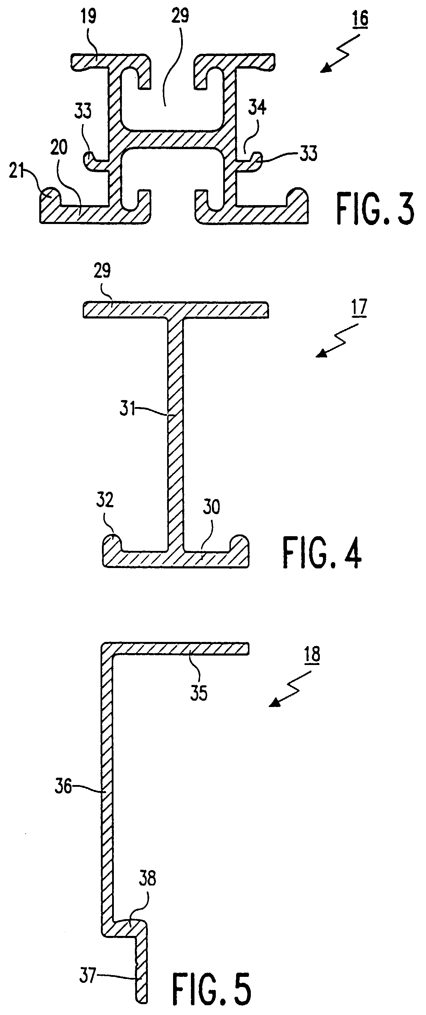

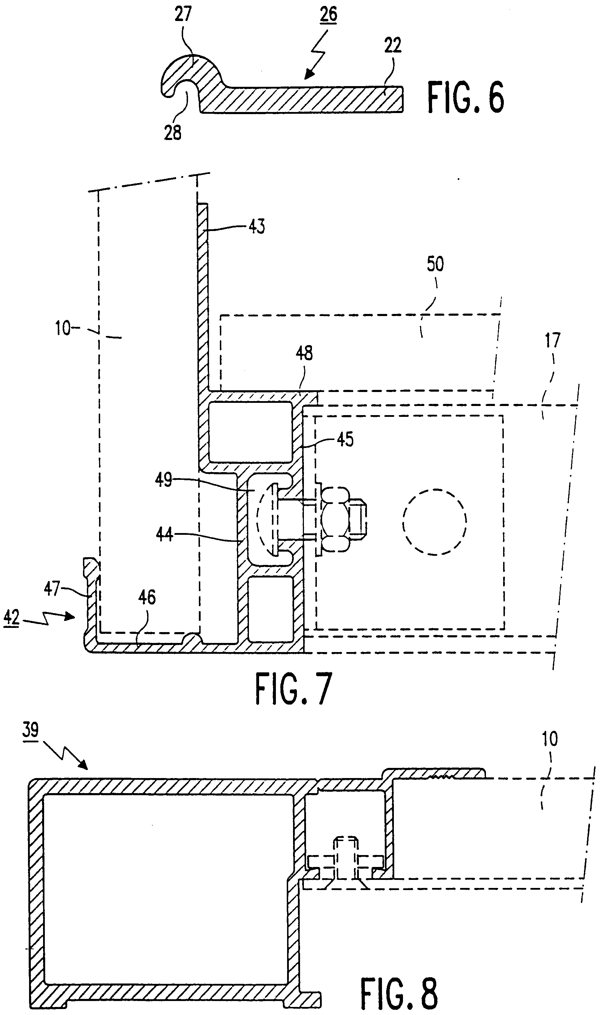

Fig. 2 shows part of the basic frame construction belonging to the floor construction 11 according to the invention, which basic frame construction is assembled largely from extruded aluminium profiles. This Figure shows three different extruded aluminium profiles serving for the assembly of the basic frame according to the invention, viz. a longitudinal runner profile 16, a second or cross beam profile 17 and a third or floor support profile 18. Longitudinal runner profiles 16 extend lengthwise of the chassis 3 of the vehicle 2, being supported among other things on steel chassis beams such as the steel longitudinal runner 4 and the steel cross beam 5. The cross beam profiles 17 lie on top of and transversely to the longitudinal runner profiles 16. As can be better seen in Fig. 3, the longitudinal runner profile 16 is a substantially H-form extruded aluminium profile having top flanges 19 and bottom flanges 20. The edges of the bottom flanges are provided with a rounded ridge 21. This ridge serves to fasten the longitudinal runner profile with the aid of mounting plates 22 engaging this ridge, to the steel chassis elements of the chassis of the vehicle, see Fig. 2 and 6. Fig. 2 shows that the longitudinal runner profile 16 is mounted on the mounting bracket 6 of the chassis with the aid of among other things the mounting plate 22, namely with the aid of a nut bolt 23, a nut 24 and a washer 25. The mounting plates 22 are comprised of lengths of an extruded aluminium profile 26, see Fig. 6. This profile is provided with a hook-like part 27 and a groove 28 which fits over the ridge 21 of the bottom flange 20 of the cross beam profile 16.

Fig. 2 also shows that the cross beam profiles 17 are also mounted on the longitudinal runner profiles 16 by means of mounting plates 22 and also with the aid of nut bolts 23, nuts 24 and washers 25. In this case the head of the bolt 23 is in the space 29, see Fig. 3, of the longitudinal runner profile 16 below the top flanges 19. The cross beam profile 17, see Fig. 4, is substantially I-shaped having a top flange 29, a bottom flange 30 and a body plate 31. The bottom flange 30 is provided at both sides with ridges 32 coinciding fully with the ridges 21 of the longitudinal runner profile 16, thus also fitting into a groove 28 of a mounting plate 22. The mounting plate 22 shown in Fig. 2 for fastening the cross beam profile 17, thus engages around the ridge 32 so that the cross beam profile 17 is securely fastened onto the upper side of the longitudinal runner profile 16.

The thus resulting difference in height between the upper side of the longitudinal runner profiles 16 and the cross beam profiles 17 is bridged with the aid of the floor support profiles 18. Fig. 3 shows that the longitudinal runner profile 16 is provided at both sides with a part 33, being in cross-section hook-shaped so that a channel is formed between the vertical legs of the hook and the part 33 which in cross-section is hook-shaped. The floor support profile 18 shown in Fig. 5 comprises a top flange 35, an upright body part 36 as well as parallel to it and in its extended direction a shorter part 37 which is connected by means of a cross-part 38 with the body part 36. The floor support profile is dimensioned such that when the lower edge of part 37 is placed in the channel 34 of the longitudinal runner profile, and the floor support profile 18 is subsequently pivoted in vertical direction, the top flange 35 is at the same level as the top flange 29 of the cross beam profile 17. By using suitable lengths of the profile 18, fast and efficient bridging of the difference in height between the cross beam profile and the longitudinal runner profile is accomplished. The floor support profiles are fixed in their vertical position by means of a suitable clamping action. The dimensions of the floor support profile 18 are adjusted to the dimensions of the longitudinal runner profile 16 in such a way that the appropriately rounded transition for the body plate 36 and the shorter part 37 click into place under a top flange 19 of the longitudinal runner profile. This results in an extremely quick and efficient method. At a later stage the floor support profiles are fixed into position by the floor which is mounted on the basic frame construction.

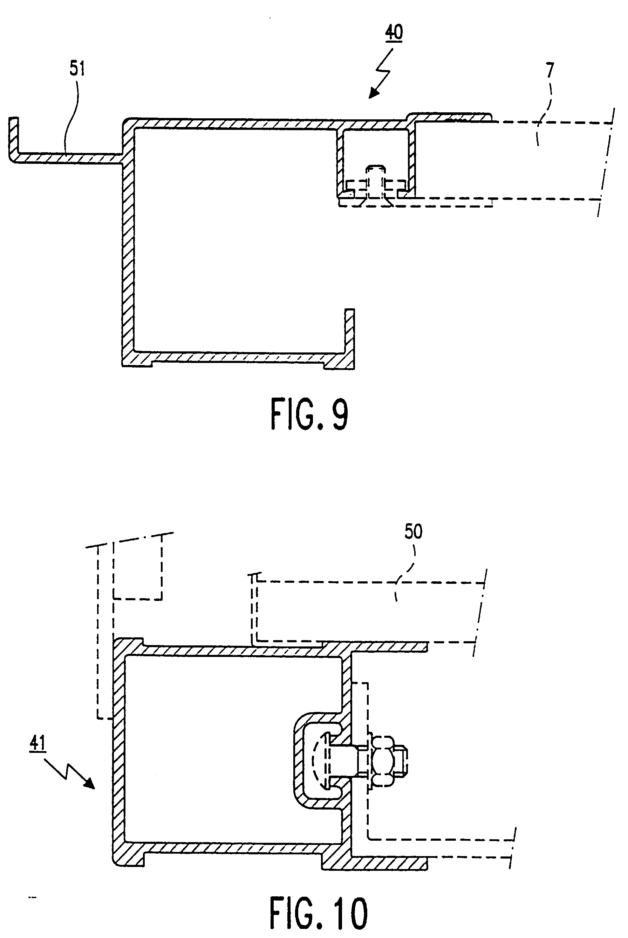

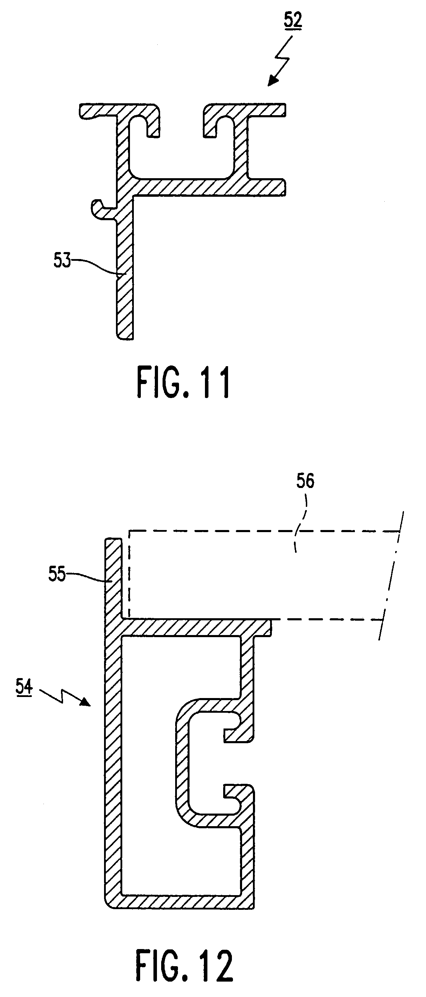

According to an embodiment of the invention the rear portal 12 does not comprise a welded steel construction, as is the case with body assemblies known from the prior art. In contrast with those, the rear portal is assembled from elements forming part of the roof 7, the side walls 10, and the floor construction 11 respectively. The uprights 15 each consist of an extruded aluminium moulded edge 39, shown in cross-section in Fig. 8 and constituting part of a side wall 10. The lintel 14 consists of an extruded aluminium profile 40, shown in cross-section in Fig. 9. The threshold 13 consists of an extruded aluminium profile 41 shown in cross-section in Fig. 10. Effectively, this construction achieves that there is no longer any separate rear portal at all, as the uprights, threshold and lintel do not exist as separate parts but as integral parts of the walls, the roof and the floor construction respectively. As the various profiles are extruded aluminium profiles, a further weight reduction of the body assembly is realized, while moreover, due to the roof, side walls and the floor construction having profiles - which eventually form a portal - edge profiles which would otherwise be required for the roof, the side walls and the floor construction are saved, resulting in a reduction of the number of parts as well as in a further weight reduction of the body assembly.

For the purpose of erecting the side walls and the front wall 8 on the floor assembly 11, it is convenient to use a siding profile 42 as shown in cross-section in Fig. 7. This profile comprises a vertical body plate 43, a further plate 44 parallel to and at some distance from said body plate 43, which two plates are connected with each other via a substantially closed rectangular box profile part 45. At the bottom of the profile a cross flange 46 is provided having at the left hand side a siding 47 parallel to the body plate 43. Between the body plate 43 and the siding 47 there is a space, the width of which is about the same as the thickness of a front wall or a side wall of the body assembly. The underside of this side wall or front edge thus rests on the bottom flange 46 and is enclosed between the body plate 43 on the one hand and the siding 47 on the other hand.

The top side of the box profile part 45 is provided with a ridge 48 extending forward. This ridge is placed on the cross-cut sides of the top flanges 29 of the cross beam profiles 17 and serves to transmit the weight of the front wall and the side walls onto the appropriate cross beam profiles 17. The drawing does not show how the siding profiles are fastened to the cross beam profiles. For this also nut bolts are used, the head of which in this case is recessed in a cavity 49 in the siding profile 42. It will be apparent to the expert that in this manner there are various suitable ways to realize a bolted connection between the siding profiles and the rest of the basic frame construction.

Although in the above the invention has been discussed with reference to only a single embodiment, it will be clear to the expert that on the basis of the characterizing parts in the claims many modifications and embodiments can be designed that are within the capability of the expert. The cross-sections of the extruded aluminium profiles may, for instance, have a different form and/or different dimensions, while also more profiles may be used having a different shape, which may be interconnected otherwise than indicated. The basic frame construction might, for instance, also be connected with the steel chassis 4 of the vehicle by means of bolts protruding through holes in the basic frame construction. However, the use of mounting plates is extremely flexible and always optimally adaptable to any particular chassis. It is also possible to use the floor construction according to the invention for bodies which are not provided with standing walls and a roof. The floor construction as such can be used with completely open flat bodies or with loading platforms, etc.

## Claims

1. A body assembly (1) to be erected on a vehicle (2) provided with a chassis (3), having steel chassis elements such as longitudinal runners (4), cross beams (5), mounting brackets (6) for the construction of a body, etc., which body can be mounted onto the chassis and comprises at any rate a floor construction (11), and possibly further parts such as walls (8, 9, 10), a roof (7) and a rear portal (12), **characterized** in that the floor construction is assembled among other materials from aluminium profiles.

2. A body assembly according to claim 1, **characterized** in that the floor construction comprises a basic frame construction consisting for a large part of extruded aluminium profiles (16, 17, 18).

3. A body assembly according to claim 1, **characterized** in that profiles (16, 17, 18) of the floor construction can be mounted onto steel chassis elements of the chassis (3) with the aid of mounting plates (22) which engage the longitudinal runner profile (16) of the basic frame construction and which can be fastened to the steel chassis elements (4, 5, 6).

4. A body assembly according to claim 1, **characterized** in that the mounting plates (22) consist of lengths of an extruded aluminium profile (26).

5. A body assembly according to claim 1, **characterized** in that the basic frame construction comprises among other things three different kinds of extruded profiles; a first, second and third kind, of which the first kind is used as longitudinal runner profile (16), the second kind as cross beam profile (17) and the third kind as floor support profile (18).

6. A body assembly according to claim 1, **characterized** in that
- the rear portal (12) is assembled from a lintel (14) and a threshold (13), as well as two uprights (15);
- that the lintel (14) consists of an extruded aluminium moulded roof edge (40);
- that the threshold (13) consists of an extruded aluminium moulded floor edge (41); and
- that each of the uprights (15) consist of an extruded aluminium moulded edge (39) of a wall (10).

7. A vehicle provided with a body assembly according to any one of the preceding claims, **characterized** in that the aluminium basic frame construction is mounted with the aid of bolts onto the steel chassis elements of the vehicles's chassis.
